# DEMANDE DE BREVET EUROPEEN

(11) **EP 4 439 974 A1**
(43) Date de publication de la demande: **02.10.2024**
(21) Numéro de dépôt: 24155731.3
(22) Date de dépôt: 05.02.2024
(51) Int. Cl.: H02S 20/10

(54) **SYSTEME DE FIXATION DE PANNEAUX PHOTOVOLTAIQUES, COMPRENANT DES PORTIQUES, POUR FIXER LES PANNEAUX PHOTOVOLTAIQUES AU-DESSUS DU SOL AU MOYEN DE CABLES ET UNE CENTRALE PHOTOVOLTAIQUE COMPRENANT LEDIT SYSTEME**

(30) Priorité: 30.03.2023 FR 2303093
(71) Demandeur: TSE, 06560 Valbonne Sophia Antipolis (FR)
(72) Inventeur: BURTIN, Denis, 38210 Vourey (FR); LABORDE, Jérôme, 69480 Lachassagne (FR)
(74) Mandataire: Murgitroyd & Company

(57) **Abrégé**

La présente invention concerne un système de fixation de panneaux photovoltaïques au moyen de câbles, le système comprenant une pluralité de modules, chaque module comprenant un ensemble d'au moins un câble porteur et d'au moins deux supports pour fixer les extrémités du câble porteur et des attaches pour fixer les panneaux solaires au câble porteur, caractérisé en ce que, au moins un des deux supports est en forme de portique.

## Description

### Domaine de l'invention

L'invention concerne un système pour fixer des panneaux photovoltaïques à une hauteur déterminée au-dessus du sol. Ledit système comprend des supports fixés sur le sol, des câbles suspendus entre les supports et des moyens de fixation pour fixer des panneaux photovoltaïques aux câbles. Les câbles comprennent des éléments de fixation adaptés pour fixer les panneaux photovoltaïques au-dessus du sol selon une inclinaison déterminée par rapport audit support.

### Etat de la technique

L'utilisation de systèmes comprenant des panneaux photovoltaïques, disposés au-dessus du sol, selon une inclinaison déterminée par rapport audit sol, a déjà été divulguée dans l'art antérieur. Plusieurs systèmes de ce type, pourvus de panneaux photovoltaïques, sont actuellement utilisés lors de créations de centrales photovoltaïques adaptées à la production d'électricité.

En règle générale, pour créer une centrale photovoltaïque, des panneaux photovoltaïques sont fixés sur des structures positionnées sur le sol, lesdits panneaux photovoltaïques demeurant près du sol. Ce type d'installation permet d'accéder aisément aux panneaux photovoltaïques pour leur entretien et leur éventuel remplacement en cas de besoin.

Dans l'art antérieur, des systèmes pourvus de panneaux photovoltaïques sont connus dans lesquels les panneaux photovoltaïques sont fixés sur une structure, à une distance déterminée par rapport au sol. Ces systèmes présentent l'avantage de libérer la surface au sol et de permettre l'utilisation de la surface présente au-dessous desdits panneaux photovoltaïques dans un autre but que celui de la production d'énergie électrique.

A titre d'exemple, le fait de positionner des panneaux photovoltaïques au-dessus des parkings destinés aux véhicules est déjà connu dans l'art antérieur. Ceci présente l'avantage de permettre l'utilisation de l'espace pour deux objectifs distincts, d'une part garer les véhicules et, d'autre part produire de l'énergie électrique grâce aux panneaux photovoltaïques installés au-dessus des véhicules.

Cependant, ces systèmes divulgués dans l'art antérieur présentent des inconvénients. En effet, les structures nécessaires à la fixation des panneaux photovoltaïques à une distance déterminée par rapport au sol sont relativement encombrantes. De tels systèmes utilisent une quantité importante de poteaux nécessaires pour supporter une structure porteuse pour l'installation des panneaux photovoltaïques, ce qui limite les possibilités d'utilisation de l'espace situé au-dessous desdits panneaux photovoltaïques. Dans le cas des parkings dédiés aux véhicules, la présence des poteaux est acceptable car ceux-ci délimitent des places individuelles sur lesdits parkings. En revanche, une telle quantité de poteaux représente un inconvénient dans le cas où l'utilisateur souhaite utiliser l'espace situé au-dessous des panneaux photovoltaïques, notamment pour des activités agricoles.

Dans l'art antérieur, on connaît également des systèmes pour fixer des panneaux photovoltaïques au-dessus du sol, les panneaux photovoltaïques étant attachés à des câbles porteurs. Ces câbles porteurs sont à leur tour attachés à des supports sous forme de pieds ou de poteaux pour maintenir les câbles au-dessus du sol.

Ces systèmes de l'art antérieur utilisant des câbles porteurs présentent un autre inconvénient. En effet, l'ensemble des câbles porteurs et des panneaux fixés sur les câbles porteurs est relativement lourd. Cela signifie que les poteaux sur lesquels les extrémités des câbles porteurs sont fixées sont soumis à une force importante, ce qui a pour effet que les jambes des poteaux ont tendance à se courber, ce qui déforme les poteaux. Pour faire face à cette force, les systèmes connus dans l'art antérieur, utilisant des câbles porteurs et des poteaux, sont complétés avec des câbles additionnels en forme de haubans et ce, pour éviter une déformation des poteaux.

La présence des haubans, ou autres types d'ancrages de poteaux, nécessite beaucoup de place, ce qui représente un réel inconvénient. De ce fait, l'espace situé sous lesdits haubans peut difficilement être valorisé. Par ailleurs, l'utilisateur est contraint de libérer une partie du terrain sur lequel il souhaite installer des panneaux photovoltaïques pour y placer ces haubans.

Pour des raisons d'efficacité et de réduction des coûts, il existe un besoin de proposer de nouvelles solutions permettant d'éviter la perte de place liée à l'utilisation des haubans ou autre types d'ancrages des poteaux auxquels les câbles porteurs sont attachés.

Un premier objectif de la présente invention consiste à fournir un système pourvu de panneaux photovoltaïques fixés sur des câbles, permettant d'améliorer l'accessibilité à l'espace situé autour dudit système pour certaines activités comme, par exemple, des activités agricoles.

### Objet de l'invention

L'objet de la présente invention concerne un système de fixation de panneaux photovoltaïques au moyen de câbles, le système comprenant une pluralité de modules, chaque module comprenant un ensemble d'au moins un premier câble et d'au moins deux supports pour fixer les extrémités du premier câble et des attaches pour fixer les panneaux photovoltaïques au premier câble, au moins un des deux supports se présentant sous la forme d'un portique.

Selon un mode de réalisation de l'invention, le portique comprend un premier et un second montant et une poutre pour relier les montants.

Selon un mode de réalisation de l'invention, les montants sont reliés au support à l'aide d'une liaison rigide.

Selon un mode de réalisation de l'invention, les montants sont reliés au support à l'aide d'une liaison articulée.

Selon un mode de réalisation de l'invention, le portique a sensiblement la forme d'un « U » à l'envers.

Selon un mode de réalisation de l'invention, le premier et le deuxième montant sont positionnés dans l'axe de la direction longitudinale du premier câble.

Selon un mode de réalisation de l'invention, au moins un module comprend un premier portique pour fixer une première extrémité du premier câble et un second portique pour fixer la seconde extrémité du premier câble.

Selon un mode de réalisation de l'invention, chaque portique comporte des éléments de fixation sur un premier côté du portique pour fixer une extrémité d'un premier câble et des éléments de fixation sur un deuxième côté opposé du portique pour fixer une extrémité d'un deuxième câble.

Selon un mode de réalisation de l'invention, le deuxième câble s'étend sensiblement parallèlement au premier câble.

Selon un mode de réalisation de l'invention, chaque portique comporte des premiers éléments de fixation sur un premier côté du portique pour attacher une extrémité du premier câble et le module comprend en outre un deuxième câble s'étendant sensiblement parallèlement au premier câble et connecté audit premier câble, le portique comportant en outre des seconds moyens de fixation sur le premier côté du portique pour attacher une extrémité du deuxième câble.

Selon un mode de réalisation de l'invention, le portique du premier module est situé de manière parallèle au portique du deuxième module, le portique du premier module étant relié au portique du deuxième module au moyen d'au moins une poutre transversale de manière à former un ensemble de portiques.

Selon un mode de réalisation de l'invention, la face supérieure et/ou latérale et/ou frontale de l'ensemble des portiques est pourvue de moyens de fixation pour fixer des panneaux solaires.

Selon un mode de réalisation de l'invention, la face supérieure de l'ensemble des portiques est pourvue d'un capteur d'instrumentation.

Selon un mode de réalisation de l'invention, l'ensemble de portiques fait partie d'une barrière pour un enclos pour des animaux.

La présente invention concerne également une centrale photovoltaïque comprenant le système selon l'invention.

### Brève description des dessins

Les but, objet et caractéristiques de l'invention apparaîtront plus clairement à la lecture de la description qui suit faite en référence aux figures dans lesquelles :
[Figure 1] montre une vue schématique d'un système fixation de panneaux photovoltaïques selon l'art antérieur, ledit système étant installé sur le sol,
[Figure 2] représente une vue schématique d'un système de fixation de panneaux photovoltaïque selon l'invention comprenant un portique,
[Figure 3] montre, de façon schématique, l'utilisation des portiques aux extrémités des câbles,
[Figure 4] représente un mode de réalisation d'un portique disposant de moyens de fixation pour fixer des câbles sur deux côtés opposés,
[Figure 5] montre une vue détaillée du réglage des câbles sur l'extrémité supérieure d'un portique,
[Figure 6] représente de façon schématique les dimensions d'un portique par rapport à celles d'un véhicule agricole,
[Figure 7] montre un mode de réalisation d'un portique comprenant des panneaux photovoltaïques positionnés à sa face supérieure,
[Figure 8] représente un ensemble de portiques, comprenant deux portiques positionnés de façon parallèle,
[Figure 9] montre un portique rigide,
[Figure 10] montre un portique semi-rigide, et
[Figure 11] montre un portique articulé.

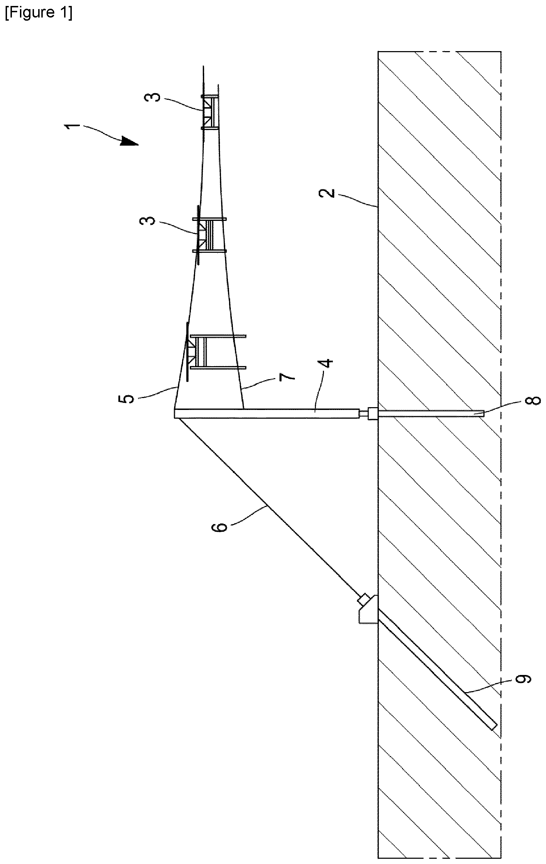

La figure 1 montre, de façon schématique, une partie d'un système 1 permettant de fixer des panneaux photovoltaïques 3 au-dessus du sol 2, selon l'art antérieur. Ledit système 1 est positionné sur le sol 2, ledit sol 2 formant le support dudit système 1.

Comme illustré sur la figure 1, le système de panneaux photovoltaïques 1 comprend une pluralité de panneaux photovoltaïques 3 disposés au-dessus du sol 2, selon une inclinaison déterminée par rapport audit sol 2.

Selon l'exemple illustré sur la figure 1, les panneaux photovoltaïques 3 sont positionnés à une distance déterminée par rapport au sol 2 afin de permettre l'utilisation du sol à des fins agricoles. A titre d'exemple, le sol 2 situé, au-dessous des panneaux photovoltaïques 3, peut être utilisé pour permettre le passage d'engins agricoles de grande taille.

Selon le même exemple, les panneaux photovoltaïques 3 permettent l'utilisation du sol 2 au-dessous des panneaux photovoltaïques car ils sont positionnés à une distance déterminée par rapport au sol 2, ladite distance étant comprise entre 2 et 10 mètres.

Les panneaux photovoltaïques 3 étant positionnés au-dessus du sol 2 selon une telle distance, une libre circulation des agriculteurs et de leurs machines agricoles et donc possible ainsi que le travail de la terre au-dessous desdits panneaux photovoltaïques 3.

Il est évidemment possible d'envisager toutes sortes d'utilisations agricoles. En effet, à titre d'exemple, l'espace disponible sous les panneaux photovoltaïques 3 peut être utilisé pour la culture de toute végétation, par exemple des arbres fruitiers, des légumes ou autres fleurs, ou encore l'élevage d'animaux.

Pour fixer les panneaux photovoltaïques 3, le système 1 comprend des poteaux de support 4 fixés sur le sol 2. Les poteaux 4 peuvent être soutenus à l'aide des micropieux ou pieux battus 8. Entre des poteaux de support des premiers câbles 5 et des deuxièmes câbles 7, sur lesquels des panneaux photovoltaïques sont fixés à l'aide d'éléments de fixation.

Pour éviter que les poteaux 4 ne se plient sous les efforts des câbles 5, 7 et les panneaux photovoltaïques 3, le système 1 est pourvu d'un ancrage dans le sol 2. L'ancrage selon la figure 1 comprend des haubans 6, fixés dans le sol 2 à l'aide des micropieux 9.

L'ancrage sur la figure 1 comprend des haubans 6 fixés dans le sol 2 à l'aide de micropieux 9. Les haubans 6 sont nécessaires à la mise en tension des câbles 5, 7 et donc à une reprise des efforts de tension.

Un des inconvénients de l'utilisation des haubans tels que montrés sur la figure 1 réside dans fait que la structure entre des poteaux adjacents 4 ne peut pas être prolongée au-delà de quelques portées et ce pour des raisons d'efforts sur lesdits haubans 6. Un autre inconvénient réside dans le fait qu'il est difficile de valoriser l'espace situé sous les haubans 6. En d'autres termes, l'espace nécessaire pour installer les haubans 6 ne peut pas être utilisé pour le passage d'engins agricoles. Dans le cas où l'utilisateur souhaite installer un système 1 selon la figure 1 sur un terrain, il doit conserver un espace libre par rapport à la limite de sa propriété pour installer des haubans. Sur cette partie, l'utilisateur ne peux ni installer des panneaux photovoltaïques ni développer une activité agricole.

Pour les raisons expliquées ci-dessus, le but de la présente invention consiste à remplacer les haubans 6, tels que représentés sur la figure 1, par une structure qui permet une utilisation plus efficace du terrain sur lequel le système 1 est installé.

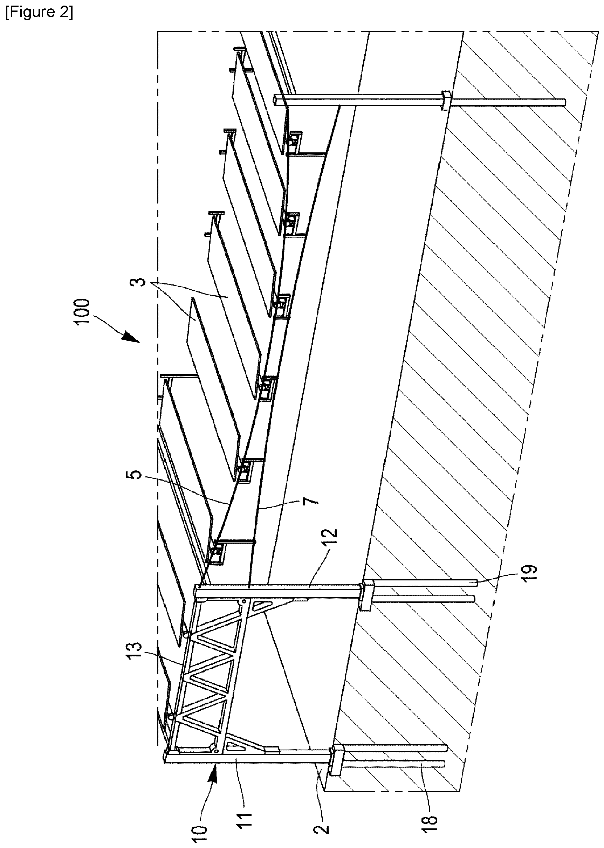

La figure 2 représente une vue schématique d'un premier mode de réalisation de l'invention. Un système permettant de fixer des panneaux photovoltaïques 3 au-dessus du sol 2 y est montré. Le système 100 comprend, en une première extrémité, un portique 10, lequel comporte un premier montant 11 et un deuxième montant 12, ledit premier montant 11 et ledit deuxième montant 12 étant connectés à l'aide d'une poutre longitudinale 13.

Le deuxième montant 12 du premier portique 10 comprend des fixations permettant de fixer une première extrémité du premier câble 5 et du deuxième câble 7, sur lesquels sont fixés des panneaux photovoltaïques 3. Des ancrages, tels que des micropieux 18 et 19 ou autres, peuvent être utilisés afin de fixer respectivement le premier montant 11 et le deuxième montant 12 du premier portique 10 sur le sol 2. Le type d'ancrage adapté pour fixer le premier portique 10 dépend des conditions du sol sur lequel celui-ci est positionné.

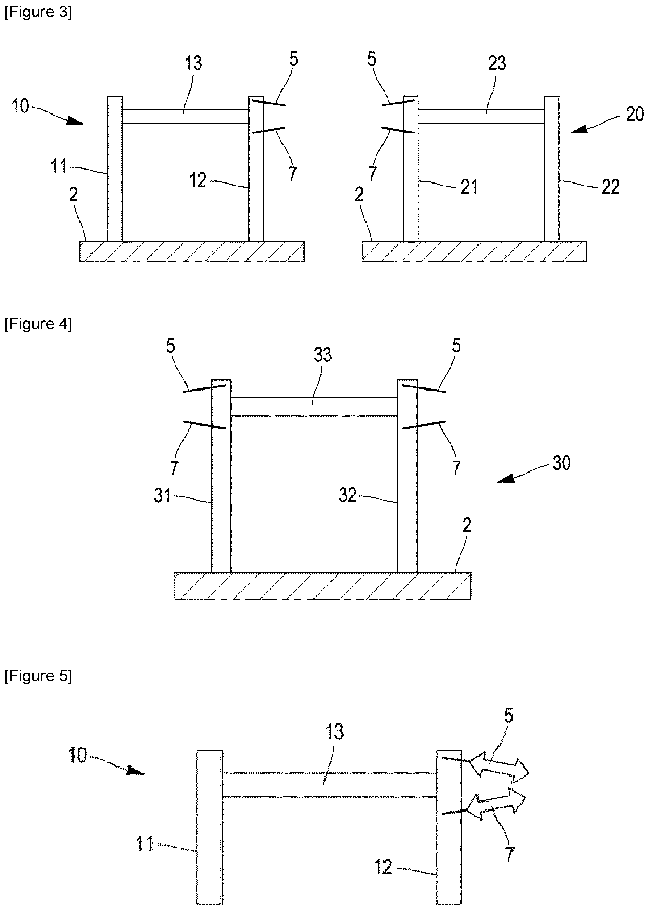

La figure 3 montre une vue schématique d'un ensemble composé d'un premier portique 10 et d'un deuxième portique 20 entre lesquels l'on peut fixer des câbles 5 et 7. La figure 3 montre un premier portique 10 pourvu d'un premier montant 11 et d'un deuxième montant 12, interconnectés à l'aide d'une poutre longitudinale 13. Le deuxième portique 20 est pourvu d'un premier montant 21 et d'un deuxième montant 22, interconnectés à l'aide d'une poutre longitudinale 23. Comme représenté sur la figure 3, les différents montants 11, 12, 21, 22 sont positionnés dans l'axe de la direction longitudinale des câbles 5 et 7.

La figure 4 représente une vue schématique d'un portique 30 pourvu d'un premier montant 31 et d'un deuxième montant 32, interconnectés à l'aide d'une poutre longitudinale 33. La figure 4 montre que le premier montant 31 et le deuxième montant 32 du portique 30 sont pourvus, chacun, de moyens permettant de fixer des câbles 5 et 7. Cela signifie que l'on peut utiliser ledit portique 30 comme élément intermédiaire dès lors que la distance entre un premier portique 10 et un deuxième portique 20 nécessite l'utilisation d'un portique additionnel 30 permettant d'assurer plus de stabilité et la reprise d'efforts sur les portiques 10, 20.

La figure 5 illustre la partie supérieure du premier portique 10 et plus particulièrement montre que ledit portique 10 permet l'intégration d'un système de réglage de la tension des câbles 5 et 7 sur le deuxième montant 12 dudit portique 10.

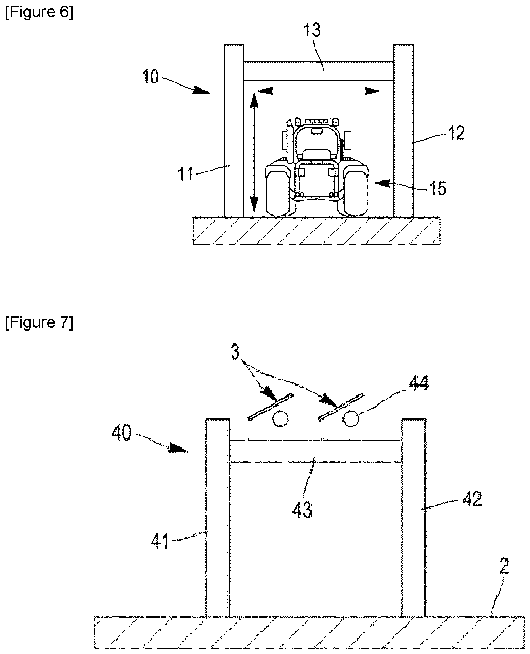

La figure 6 représente une vue selon laquelle, de façon préférée, les portiques 10, 20, 30 offrent des dimensions permettant le passage d'engins agricoles. En effet, la figure 6 illustre clairement que la distance entre les montants 11, 12 est suffisante pour laisser, par exemple, passer un tracteur. La poutre longitudinale 13 est également positionnée à une hauteur suffisante pour permettre le passage dudit tracteur. La surface couverte par le portique 10 peut être utilisée à des fins agricoles. La hauteur sous la poutre longitudinale 13 peut être comprise entre environ 2 et 25 mètres.

La figure 7 montre une vue schématique d'un mode de réalisation d'un portique 40, pourvu d'un premier montant 41 et d'un deuxième montant 42, interconnectés à l'aide d'une poutre longitudinale 43. L'exemple selon la figure 7 illustre la poutre longitudinale 43, pourvue de fixations permettant de fixer des panneaux photovoltaïques 3. La partie supérieure du portique 40 peut donc recevoir des panneaux photovoltaïques 3 supplémentaires. La présence de panneaux photovoltaïques 3 additionnels sur les portiques 40 permet de générer une production d'énergie électrique additionnelle. Selon un mode de réalisation de l'invention, des panneaux photovoltaïques 3 peuvent donc être installés sur la partie supérieure du portique 40, à l'aide de poutres 44, lesquels poutres 44 sont représentées à l'aide d'un élément circulaire sur ladite figure 7. Les poutres 44 peuvent être fixées sur l'extrémité supérieure du portique 40, de manière à être mobiles en rotation, permettant ainsi de modifier l'inclinaison des panneaux photovoltaïques 3 par rapport au sol 2.

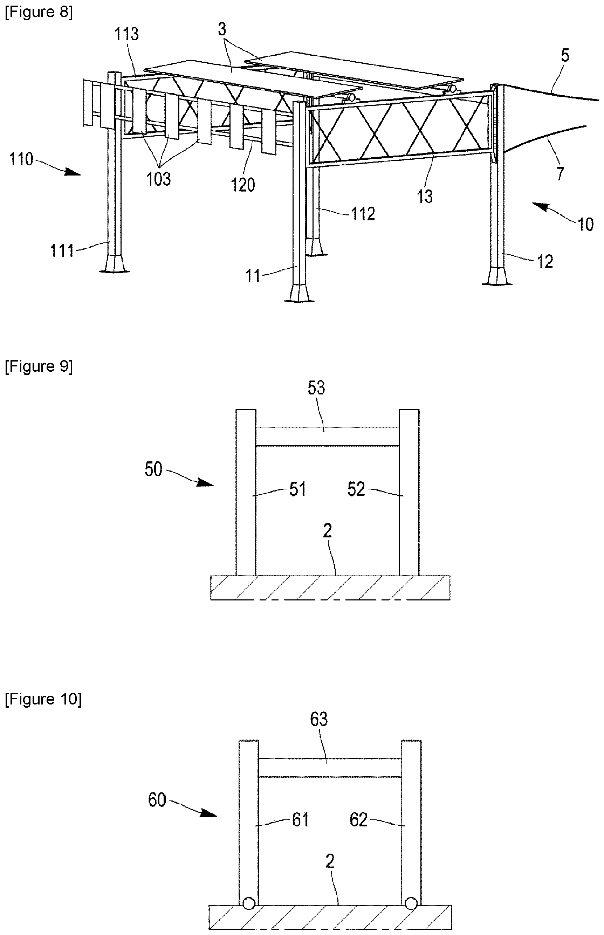

La figure 8 illustre un ensemble composé d'un premier portique 10 et d'un deuxième portique 110, les deux étant positionnés côte à côte, de manière adjacente. Le premier portique 10 est pourvu d'un premier montant 11 et d'un deuxième montant 12, interconnectés à l'aide d'une poutre longitudinale 13. De façon similaire, le deuxième portique 110 est pourvu d'un premier montant 111 et d'un deuxième montant 112, interconnectés à l'aide d'une poutre longitudinale 113. Les portiques 10, 110 sont également interconnectés à l'aide d'une poutre transversale 120 permettant de créer un ensemble de portiques 10, 110, ladite poutre transversale 120 pouvant également servir d'élément de renforcement de l'ensemble de portiques 10, 110. Pour des raisons de clarté, la présence des câbles n'est pas illustrée sur la figure 8.

La figure 8 représente la présence de panneaux photovoltaïques 3 installés au-dessus des poutres transversales 13, 113. Par ailleurs, des panneaux photovoltaïques verticaux 103 sont fixés sur la partie supérieure de l'ensemble des portiques 10, 110, dont la présence peut permettre d'augmenter la quantité d'énergie électrique pouvant être récupérée grâce au système selon la présente invention. En complément des éléments déjà visibles sur la figure 8, il est possible d'installer des brise-vents sur la construction afin d'alléger les charges exercées par le vent sur les panneaux photovoltaïques 3. Un tel brise-vent peut, par exemple, se présenter sous la forme de treillis, de tôle pleine ou de tôle perforée.

Selon l'exemple illustré sur la figure 8, les panneaux photovoltaïques 103 verticaux permettent, de façon simultanée, d'assurer une fonction de brise-vent mais également d'assurer une production d'énergie électrique. L'ensemble composé des portiques 10, 110 peut être complété en y ajoutant des instrumentations permettant soit de modifier l'inclinaison des panneaux photovoltaïques par rapport au sol, soit d'ajouter, par exemple, des capteurs météorologiques tels qu'un capteur de détection du vent par exemple. L'ajout de telles instrumentations permet d'agir simultanément sur l'inclinaison des panneaux photovoltaïques par rapport au sol 2, et ce pour une utilisation optimale de la surface située sous l'ensemble des portique 10, 110, et sur la production d'énergie électrique par lesdits panneaux photovoltaïques.

Il convient de noter que la structure de l'ensemble composé des portiques 10, 110 peut être utilisée à des fins agricoles. A titre d'exemple, les montants 11, 12, 111, 112 de ladite structure peuvent servir de base à une barrière pour un enclos pour des animaux. Une autre option consiste à utiliser lesdits montants 11, 12, 111, 112 pour des cultures verticales.

Les figures 9, 10, 11 illustrent, de façon schématique une façon de fixer un portique selon la présente invention.

La figure 9 montre un portique 50 pourvu d'une fixation rigide, la fixation des montants 51, 52 sur le sol 2 demeure donc parfaitement rigide, l'interconnexion des montants 51, 52 et de la poutre longitudinale est donc également obtenue de façon rigide.

La figure 10 illustre un portique 60 pourvu d'une fixation ou liaison que l'on pourrait qualifier de liaison « semi-articulée » pouvant opérer à la fois comme une liaison rigide et comme une liaison articulée. L'interconnexion des montants 61, 62 avec le sol 2 est obtenue de façon articulée. En revanche, l'interconnexion entre les montants 61, 62 et la poutre longitudinale 63 est obtenue de façon rigide.

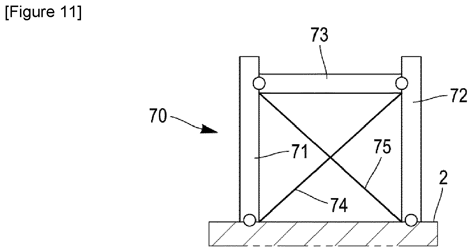

La figure 11 représente un portique 70 articulé. Les montants 71, 72 sont fixés sur le sol 2 de façon articulée. L'interconnexion entre les montants 71, 72 et la poutre longitudinale 73 est obtenue de façon articulée. Le portique 70 est complété à l'aide d'éléments de renforcement 74, 75 dans le but d'obtenir la rigidité nécessaire audit portique 70.

Les différents types de portiques 50, 60, 70, tels qu'illustrés sur les figures 9, 10, 11 permettent d'adapter l'utilisation desdits portiques 50, 60, 70 sur le sol en fonction de l'inclinaison des surfaces sur lesquels lesdits portiques 50, 60, 70 sont installés.

## Revendications

1. Système de fixation de panneaux photovoltaïques au moyen de câbles, le système comprenant une pluralité de modules, chaque module comprenant un ensemble d'au moins un premier câble et d'au moins deux supports pour fixer les extrémités du premier câble et des attaches pour fixer les panneaux solaires au premier câble, **caractérisé en ce que**, au moins un des deux supports est en forme de portique, dans lequel le portique comprend un premier et un second montant et une poutre pour relier les montants, dans lequel le premier et le second montant sont positionnés dans l'axe de la direction longitudinale du premier câble.

2. Système selon la revendication 1, dans lequel les montants sont reliés au support à l'aide d'une liaison rigide.

3. Système selon la revendication 1, dans lequel les montants sont reliés au support à l'aide d'une liaison articulée.

4. Système selon l'une quelconque des revendications précédentes, dans lequel le portique a sensiblement la forme d'un « U » à l'envers.

5. Système selon l'une quelconque des revendications précédentes, dans lequel au moins un module comprend un premier portique pour fixer une première extrémité du premier câble et un second portique pour fixer la seconde extrémité du premier câble.

6. Système selon l'une quelconque des revendications précédentes, dans lequel chaque portique comporte des éléments de fixation sur un premier côté du portique pour fixer une extrémité d'un premier câble, et des éléments de fixation sur un deuxième côté opposé du portique pour fixer une extrémité d'un deuxième câble.

7. Système selon la revendication 6, dans lequel le deuxième câble s'étend sensiblement parallèlement au premier câble.

8. Système selon l'une quelconque des revendications précédentes, dans lequel chaque portique comporte des premiers éléments de fixation sur un premier côté du portique pour attacher une extrémité du premier câble et dans lequel le module comprend en outre un deuxième câble s'étendant sensiblement parallèlement au premier câble et qui est connecté audit premier câble, dans lequel le portique comporte en outre des seconds moyens de fixation sur le premier côté du portique pour attacher une extrémité du deuxième câble.

9. Système selon l'une quelconque des revendications précédentes, dans lequel le système comprend au moins un premier et un deuxième module adjacent, dans lequel le portique du premier module est situé de manière parallèle du portique du deuxième module, dans lequel le portique du premier module est relié au portique du deuxième module au moyen d'au moins une poutre transversale de manière à former un ensemble de portiques.

10. Système selon la revendication 9, dans lequel la face supérieure de l'ensemble des portiques est pourvue de moyens de fixation pour fixer des panneaux solaires.

11. Système selon l'une quelconque des revendications 9 ou 10, dans lequel la face supérieure de l'ensemble des portiques est pourvue d'un capteur de détection du vent.

12. Système selon l'une quelconque des revendications 9 à 11, dans lequel l'ensemble de portiques fait partie d'une barrière pour un enclos pour des animaux.

13. Centrale photovoltaïque comprenant le système selon l'une des revendications 1 à 12.
